# EUROPÄISCHE PATENTSCHRIFT

(11) **EP 3 227 565 B1**
(45) Veröffentlichungstag und Bekanntmachung des Hinweises auf die Patenterteilung: **18.09.2019**
(21) Anmeldenummer: 15730457.7
(22) Anmeldetag: 15.06.2015
(51) Int. Cl.: F15B 15/06, F15B 15/28, F16K 31/163

(54) **DREHANTRIEB MIT STELLUNGSRÜCKMELDER UND PROZESSVENTILBAUEINHEIT**
ROTARY DRIVE WITH POSITION INDICATOR AND PROCESS VALVE UNIT
ENTRAÎNEMENT ROTATIF MUNI D'UN DISPOSITIF DE RENVOI DE SIGNAUX DE POSITION ET D'UN ENSEMBLE SOUPAPE DE PROCESSUS

(43) Veröffentlichungstag der Anmeldung: 11.10.2017
(73) Patentinhaber: Festo AG & Co. KG, 73734 Esslingen (DE)
(72) Erfinder: MÖDINGER, Uwe, 73249 Wernau (DE); SCHNEIDER, Mathias, 70435 Stuttgart (DE); MESSERSCHMIDT, Karl, 73730 Esslingen (DE); FEILER, Andreas, 73529 Schwäbisch Gmünd (DE)
(74) Vertreter: Patentanwälte Magenbauer & Kollegen Partnerschaft mbB
(86) Internationale Anmeldenummer: PCT/EP2015/063325
(87) Internationale Veröffentlichungsnummer: WO 2016/202354

(56) Entgegenhaltungen:
- EP-B1- 1 325 236
- EP-B1- 2 531 730
- JP-A- 2003 120 608
- US-A- 6 135 147

## Beschreibung

Die Erfindung betrifft einen fluidbetätigten Drehantrieb mit einem Gehäuse, das einen sich entlang einer Axialrichtung erstreckenden Rohrkörper aufweist, in dem eine Antriebskolbenanordnung zum Antrieb einer drehbar gelagerten Abtriebswelle vorgesehen ist, die senkrecht zur Axialrichtung durch den Rohrkörper verläuft und deren axiales Ende an einem oberen Wandungsabschnitt des Rohrkörpers aus dem Rohrkörper herausgeführt wird, mit einer dem axialen Ende der Abtriebswelle zugehörigen, eine Drehbewegung der Abtriebswelle aufnehmenden Magnetanordnung, und mit einem Stellungsrückmelder, der ausgebildet ist, das von der Magnetanordnung erzeugte Magnetfeld zu erfassen und in Abhängigkeit von dem erfassten Magnetfeld ein einer Stellung der Abtriebswelle entsprechendes Stellungssignal bereitzustellen.

Ein Drehantrieb dieser Art wird in der Regel auf eine Ventilarmatur bzw. ein Prozessventil aufgesetzt und dient dazu, ein in einem Prozessfluid befindliches Ventilglied der Ventilarmatur zu betätigen, um einen Fluidstrom zu regeln und/oder zu sperren. Die Abtriebswelle des Drehantriebs ist dabei an eine Spindel der Ventilarmatur mechanisch angekoppelt. Die Spindel wiederum ist an das Ventilglied der Ventilarmatur mechanisch angekoppelt, so dass über eine Betätigung der Spindel das Ventilglied betätigt wird. Das Ventilglied der Ventilarmatur ist beispielsweise als Klappe, Drosselklappe, Kegelventil, Kugelventil, oder Kugelhahn ausgebildet. Durch die Kopplung zwischen der Abtriebswelle und dem Ventilglied wird die Stellung des Ventilglieds durch die Stellung der Abtriebswelle bestimmt.

Es ist wünschenswert, die Stellung des Ventilglieds zu erfassen, um so den Betrieb der Ventilarmatur besser überwachen zu können. Aufgrund der Kopplung zwischen dem Ventilglied und der Abtriebswelle muss dafür die Stellung des Ventilglieds nicht direkt erfasst werden. Stattdessen kann die Stellung des Ventilglieds auch indirekt über eine Erfassung der Stellung der Abtriebswelle erfasst werden.

Aus dem Stand der Technik ist bekannt, die Stellung der Abtriebswelle eines Drehantriebs mit Hilfe eines auf der Oberseite des Drehantriebs angebrachten Stellungsrückmelders zu erfassen. Der aus dem Stand der Technik bekannte Stellungsrückmelder weist beispielsweise Mikroschalter oder induktive Schalter auf, die über einstellbare Kontaktnocken bei bestimmten Stellungen der Abtriebswelle betätigt werden und entsprechende Signale an ein Kontroll- bzw. Leitsystem ausgeben.

Aus der US 6,135,147 ist ein Drehantrieb mit einer oben auf dem Gehäuse des Drehantriebs angebrachten Überwachungsanordnung bekannt, die dazu dient, die Stellung der Abtriebswelle zu erfassen. Zu diesem Zweck ist an der oben aus dem Gehäuse herausragenden Abtriebswelle eine mit Magneten versehene Anzeigevorrichtung befestigt, die sich zusammen mit der Abtriebswelle dreht. Ferner sind in einer Überwachungsanordnung, die oben auf dem Gehäuse neben der Anzeigevorrichtung angeordnet ist, Magnetschalter vorgesehen, die abhängig von der Lage der Magnete eine Bestromung von LEDS bewirken.

Die EP 2 531 730 B1 und die EP 1 325 236 B1 beschreiben jeweils Sensoren, die außerhalb eines oberen Wandungsabschnitts eines Rohrkörpers positioniert sind.

Die JP 2003 120608 A zeigt eine Endlagenabfrage, bei der die Sensoren in Nuten in einem seitlichen Wandungsabschnitt angeordnet sind.

Es ist eine Aufgabe der Erfindung, einen Drehantrieb mit einem Stellungsrückmelder in besonders praktischer und kompakter Bauweise bereitzustellen.

Die Aufgabe wird für einen fluidbetätigten Drehantrieb der eingangs beschriebenen Art mit den Merkmalen des Anspruchs 1 gelöst.

Bei dem erfindungsgemäßen fluidbetätigten Drehantrieb ist der Stellungsrückmelder in einer in dem oberen Wandungsabschnitt des Rohrkörpers ausgebildeten Aufnahmekammer angeordnet bzw. eingesetzt.

Erfindungsgemäß ist der Stellungsrückmelder also innen in der Wandung des Rohrkörpers angeordnet. Dadurch ergibt sich gegenüber dem Stand der Technik eine praktische und kompakte Bauweise, bei welcher der Stellungsrückmelder den Bauraum des Drehantriebs kaum bzw. nicht vergrößert. Zudem ist der Stellungsmelder dadurch optimal vor mechanischen Beschädigungen und schädlichen Umwelteinflüssen geschützt.

Erfindungsgemäß ist der Stellungsrückmelder ferner in demselben Wandungsabschnitt des Rohrkörpers angeordnet, aus dem das axiale Ende der Abtriebswelle herausgeführt wird. Dies ist von Vorteil, weil dadurch der Abstand zwischen der Magnetanordnung und dem Stellungsrückmelder verringert wird, so dass das Magnetfeld der Magnetanordnung besser erfasst werden kann, bzw. die Anforderungen an die Magnetanordnung und den Stellungsrückmelder geringer sind.

Insbesondere ist die Aufnahmekammer dabei länglich ausgebildet und in Richtung des axialen Endes der Abtriebswelle aus gerichtet. Der Stellungsrückmelder kann so besonders nah an die dem axialen Ende der Abtriebswelle zugehörige Magnetanordnung herangeführt werden.

Vorzugsweise ist der Drehantrieb dazu geeignet, auf eine Ventilarmatur aufgesetzt zu werden und zusammen mit der Ventilarmatur eine Prozessventilbaueinheit zu bilden. Eine solche Prozessventilbaueinheit wird häufig an Orten eingesetzt, wo aufgrund mehrerer übereinander oder nebeneinander angeordneter Rohrstränge nur wenig Bauraum vorhanden ist. Die kompakte Bauweise des Drehantriebs erzielt den Vorteil, dass auch gerade an solchen Orten mit stark begrenztem Bauraum der Einsatz eines Drehantriebs mit Stellungsrückmelder möglich wird.

Vorzugsweise ist der Stellungsrückmelder vollständig in dem oberen Wandungsabschnitt des Rohrkörpers angeordnet. Dies erzielt den Vorteil einer sehr kompakten Bauweise.

Alternativ dazu ist es auch möglich, dass ein Anschluss des Stellungsrückmelders nach oben aus dem oberen Wandungsabschnitt durch eine dort vorgesehene Aussparung herausragt. Dadurch kann der Stellungsrückmelder in sehr einfacher Weise mit beispielsweise einem externen Steuergerät verbunden werden.

An dieser Stelle sei erwähnt, dass im Zusammenhang mit dem hier beschriebenen Drehantrieb die Angaben "oben" und "unten" keine Orientierung in Bezug auf die Erdoberfläche oder Gravitation definieren sollen, sondern lediglich der Bezeichnung bestimmter Seiten des Drehantriebs bzw. bestimmter Richtungen relativ zur Abtriebswelle dienen. Insbesondere ist mit "oben" die Seite des Drehantriebs, auf der das axiale Ende der Abtriebswelle herausgeführt wird, bzw. die aus dem Gehäuse herausführende Axialrichtung der Abtriebswelle hin zu dem axialen Ende der Abtriebswelle gemeint.

Die dem axialen Ende der Abtriebswelle zugehörige Magnetanordnung nimmt eine Drehbewegung der Abtriebswelle auf. Das bedeutet, dass die Magnetanordnung und die Abtriebswelle drehfest miteinander verbunden sind, so dass sich die Magnetanordnung mit der Abtriebswelle mitdreht bzw. von dieser verschwenkt wird. Dementsprechend wird die Stellung der Magnetanordnung von der Stellung der Abtriebswelle bestimmt. Hierfür kann die Magnetanordnung direkt an der Abtriebswelle befestigt sein oder kann in einem Modul, wie beispielsweise einem Stellungsanzeiger, untergebracht sein, das/der wiederum drehfest mit der Abtriebswelle verbunden ist.

Die Magnetanordnung ist insbesondere derart ausgebildet und/oder angeordnet, dass der Stellungsrückmelder bei verschiedenen Stellungen der Abtriebswelle auch verschiedene Magnetfelder bzw. verschiedene Magnetfeldstärken erfasst. Zu diesem Zweck kann die Magnetanordnung mit einer räumlich variierenden Magnetisierung versehen sein. Alternativ oder zusätzlich dazu kann die Magnetanordnung derart relativ zur Abtriebswelle angeordnet sein, dass das von der Magnetanordnung erzeugte Magnetfeld in Bezug auf die Axialrichtung der Abtriebswelle in wenigstens einer Raumrichtung nicht kreissymmetrisch ist.

Der Stellungsrückmelder ist ausgebildet, das von der Magnetanordnung erzeugte Magnetfeld zu erfassen. Der Stellungsrückmelder weist zu diesem Zweck zum Beispiel ein Magnetfeldsensorelement auf, das ausgebildet ist, eine Magnetfeldstärke in einer oder mehreren Raumrichtungen zu erfassen.

In Abhängigkeit von dem erfassten Magnetfeld stellt der Stellungsrückmelder ein einer Stellung bzw. Winkelstellung der Abtriebswelle entsprechendes Stellungssignal bereit. Vorzugsweise umfasst der Stellungsrückmelder dafür eine Auswerteelektronik, die das erfasste Magnetfeld bzw. die von dem Magnetfeldsensorelement erfasste Magnetfeldstärke oder Magnetfeldstärken in ein die Winkelstellung der Abtriebswelle darstellendes Stellungssignal umsetzt. Diese Integration der Auswerteelektronik in der Wandung des Rohrkörpers ist besonders vorteilhaft, da dadurch keine externe bzw. außen am Rohrkörper angeordnete und damit den Bauraum des Drehantriebs vergrößernde Auswerteeinheit vorgesehen werden muss.

Der Stellungsrückmelder kann ausgebildet sein, ein oder zwei Winkelstellungen der Abtriebswelle, wie beispielsweise die beiden Endstellungen der Abtriebswelle zu erfassen und in dem Stellungssignal darzustellen. Endstellungen sind in diesem Zusammenhang insbesondere Stellungen der Abtriebswelle, bei denen ein von dem Drehantrieb betätigtes Ventilglied einer Ventilarmatur vollständig geöffnet oder gesperrt ist. Bei den Endstellungen der Abtriebswelle kann das Ventilglied aber auch andere Stellungen, wie z.B. eine erste und eine zweite Stellung einnehmen. Ferner kann der Stellungsrückmelder auch ausgebildet sein, beliebige Winkelstellungen der Abtriebswelle zwischen den Endstellungen zu erfassen und in dem Stellungssignal darzustellen.

Vorzugsweise weist der Rohrkörper einen Kolbenraum auf, in dem die Antriebskolbenanordnung angeordnet ist. Zweckmäßigerweise umfasst die Antriebskolbenanordnung einen ersten und einen zweiten Antriebskolben, die den Kolbenraum in wenigstens zwei Kammern unterteilen. Zweckmäßigerweise können die beiden Kammern mit verschiedenen Drücken beaufschlagt werden, um eine Linearbewegung des Antriebskolbens und somit eine Drehbewegung der Abtriebswelle zu bewirken.

Vorteilhafte Weiterbildungen der Erfindung sind Gegenstand der Unteransprüche.

Bei einer Ausgestaltung der Erfindung ist vorgesehen, dass die Aufnahmekammer zu einer Stirnseite und/oder einer Längsseite des Rohrkörpers offen ist.

Dies bedeutet, dass die Aufnahmekammer an der Stirnseite und/oder einer Längsseite des Rohrkörpers ausmündet. Eine solche Öffnung zu der Aufnahmekammer in einer Stirnseite und/oder einer Längsseite des Rohrkörpers erzielt insbesondere den Vorteil, dass der Stellungsrückmelder in einfacher Weise in die Aufnahmekammer eingesetzt bzw. ausgetauscht werden kann, wodurch die Herstellung bzw. Wartung des Drehantriebs vereinfacht wird.

Vorzugsweise kann die Aufnahmekammer parallel oder quer zur Axialrichtung des Rohrkörpers ausgerichtet sein und der Einbau des Stellungsrückmelders entsprechend erfolgen. Zweckmäßigerweise kann der Einbau des Sensors quer zur Axialrichtung des Rohrkörpers erfolgen. Insbesondere kann der Stellungsrückmelder direkt in das Gehäuse montiert werden, ohne dass der Bauraum des Stellungsrückmelders verschlossen bzw. der Stellungsrückmelder nach außen hin abgedeckt wird.

In weiterer Ausgestaltung der Erfindung ist vorgesehen, dass an der Stirnseite ein Gehäusedeckel angesetzt ist, der eine Aussparung aufweist, durch welche ein Anschluss und/oder ein Anschlusskabel zu dem Stellungsrückmelder geführt ist.

Insbesondere fluchtet dabei die Aussparung des Gehäusedeckels mit einer in der Stirnseite des Rohrkörpers vorgesehenen Öffnung zur Aufnahmekammer, so dass das Anschlusskabel von außen direkt zu dem in der Aufnahmekammer befindlichen Stellungsrückmelder geführt werden kann. Alternativ dazu ist es auch möglich, dass ein Anschluss des Stellungsrückmelders aus der Öffnung zur Aufnahmekammer und der Aussparung des Gehäusedeckels in axialer Richtung des Rohrkörpers herausragt.

Der Anschluss bzw. das Anschlusskabel kann mit einer Steuereinheit verbunden werden, die das von dem Stellungsrückmelder bereitgestellte Stellungssignal empfängt und den Stellungsrückmelder vorzugsweise mit Strom bzw. Energie versorgt.

In weiterer Ausgestaltung der Erfindung ist vorgesehen, dass an der Stirnseite ein Gehäusedeckel angesetzt ist, der die Aufnahmekammer zur Stirnseite hin abdeckt und vorzugsweise den Stellungsrückmelder in der Aufnahmekammer hält.

Alternativ zu der vorstehend beschriebenen Ausgestaltung, bei welcher der Gehäusedeckel die Öffnung in der Stirnseite zur Aufnahmekammer durch eine Aussparung freigibt, deckt hier der Gehäusedeckel die Aufnahmekammer bzw. die Öffnung zur Aufnahmekammer ab. Vorzugsweise kann dadurch der Stellungsrückmelder in der Aufnahmekammer gehalten werden, so dass für den Stellungsrückmelder keine weiteren Befestigungsmittel erforderlich sind. Alternativ dazu kann der Stellungsrückmelder auch mittels wenigstens eines Befestigungsmittels in der Aufnahmekammer befestigt werden. Insbesondere kann der Einbau des Stellungsrückmelders auch ohne Gehäusedeckel erfolgen, bzw. in der Aufnahmekammer ohne den Gehäusedeckel gehalten werden. Hierfür kann der Einbau des Sensors als Klemmstück erfolgen. Vorzugsweise kann der Sensor mittels Schrauben oder Klemmen in der Aufnahmekammer gehalten werden.

In weiterer Ausgestaltung der Erfindung ist vorgesehen, dass der Stellungsrückmelder einen länglichen, vorzugsweise ein Magnetfeldsensorelement aufweisenden, Schaftabschnitt und einen Kopfabschnitt umfasst, wobei der Querschnitt des Kopfabschnitts breiter und/oder höher als der Querschnitt des Schaftabschnitts ist.

Dementsprechend weist der Stellungsrückmelder wenigstens zwei unterschiedlich ausgestaltete Abschnitte auf - nämlich zumindest einen breiten und/oder hohen Kopfabschnitt und einen länglichen Schaftabschnitt. Zwischen dem Kopfabschnitt und dem Schaftabschnitt können noch weitere Abschnitte vorgesehen sein. Vorzugsweise ist in bzw. an dem Kopfabschnitt die Auswerteelektronik und/oder der Anschluss vorgesehen und in dem Schaftabschnitt das Magnetfeldsensorelement. Aufgrund der länglichen Ausbildung des Schaftabschnitts kann das Magnetfeldsensorelement besonders nahe an die an dem axialen Ende der Abtriebswelle angeordnete Magnetanordnung herangeführt werden. Der breiter und/oder höher als der Schaftabschnitt ausgebildete Kopfabschnitt bietet Platz für die Auswerteelektronik und/oder einen Anschluss.

Alternativ dazu kann der Stellungsrückmelder auch ohne verschiedene Abschnitte bzw. ohne "Sprung" im Längsschnitt ausgebildet sein. Insbesondere kann der Stellungsmelder auch mit konstantem Querschnitt entlang der Längsachse, z.B. in der Form eines Zylinders mit vorzugsweise beliebiger Grundfläche ausgebildet sein.

In weiterer Ausgestaltung der Erfindung ist vorgesehen, dass die Aufnahmekammer einen ersten Abschnitt aufweist, der zu der Stirnseite des Rohrkörpers offen ist und den Kopfabschnitt aufnimmt, und einen zweiten Abschnitt aufweist, der in einer Rückwand des ersten Abschnitts ausmündet und den Schaftabschnitt aufnimmt.

Insbesondere erstreckt sich dabei der zweite Abschnitt der Aufnahmekammer in Richtung des axialen Endes der Abtriebswelle. Vorzugsweise erstreckt sich der zweite Abschnitt der Aufnahmekammer bzw. der Schaftabschnitt des Stellungsrückmelders bis unter die Magnetanordnung.

In weiterer Ausgestaltung der Erfindung ist vorgesehen, dass der Querschnitt des Kopfabschnitts breiter und/oder höher als der Querschnitt des zweiten Abschnitts ist, so dass der Kopfabschnitt an der Rückwand des ersten Abschnitts anliegt.

Insbesondere kann dabei der Kopfabschnitt zwischen der Rückwand des ersten Abschnitts und dem Gehäusedeckel verspannt werden, um so den Stellungsrückmelder in der Aufnahmekammer zu fixieren. Dadurch, dass der Kopfabschnitt an der Rückwand des ersten Abschnitts anliegt, kann zudem der mit einem empfindlichen Magnetfeldsensorelement ausgestattete Schaftabschnitt mechanisch entlastet bzw. geschützt werden.

In weiterer Ausgestaltung der Erfindung ist vorgesehen, dass der Drehantrieb einen auf das axiale Ende der Abtriebswelle aufgesetzten Stellungsanzeiger umfasst, in dem die Magnetanordnung angeordnet ist.

Der Stellungsanzeiger kann insbesondere zylinder- bzw. scheibenförmig ausgebildet und koaxial zu der Abtriebswelle angeordnet sein. Insbesondere weist der Stellungsanzeiger die Form eines Pucks auf. Vorzugsweise ist die Magnetanordnung in einem unteren Abschnitt des Stellungsanzeigers und damit nahe an der Aufnahmekammer in dem oberen Wandungsabschnitt des Rohrkörpers angeordnet. Insbesondere sind die Aufnahmekammer und der Stellungsanzeiger derart angeordnet bzw. ausgebildet, dass sich die Aufnahmekammer bis unterhalb des Stellungsanzeigers erstreckt.

In weiterer Ausgestaltung der Erfindung ist vorgesehen, dass der Stellungsanzeiger ein Anzeigeelement, vorzugsweise eine Markierung, zur visuellen Anzeige einer Stellung der Abtriebswelle aufweist.

Vorzugsweise ist das Anzeigeelement bzw. die Markierung in Bezug auf die Axialrichtung der Abtriebswelle nicht kreissymmetrisch ausgebildet, so dass aus der Ausrichtung des Anzeigeelements bzw. der Markierung visuell auf die aktuelle Winkelstellung der Abtriebswelle geschlossen werden kann.

Der Stellungsanzeiger dient somit zwei verschiedenen Zwecken. Zum einen ermöglicht er es einem Benutzer, mithilfe des Anzeigeelements die aktuelle Winkelstellung der Abtriebswelle und dadurch auch eine Winkelstellung eines von der Abtriebswelle betätigten Ventilglieds einer Ventilarmatur zu erfassen. Zum anderen dient der Stellungsanzeiger dazu, die Magnetanordnung aufzunehmen und gemäß einer Drehbewegung der Abtriebswelle relativ zum Stellungsrückmelder zu drehen bzw. verschwenken, so dass am Stellungsrückmelder die Drehbewegung bzw. eine dadurch hervorgerufene Winkelstellungsänderung der Abtriebswelle zu einem veränderten Magnetfeld führt und somit erfasst werden kann.

In weiterer Ausgestaltung der Erfindung ist vorgesehen, dass der Stellungsanzeiger abnehmbar an der Abtriebswelle angebracht ist und der Drehantrieb ausgebildet ist, bei einer mittels des Stellungsrückmelders erfassten Abnahme und/oder Anbringung des Stellungsanzeigers einen vorbestimmten Betriebszustand, vorzugsweise wenigstens einen Kalibrierungszustand, einen Entlüftungszustand, einen Not-Aus-Zustand und/oder einen Wartungszustand einzunehmen.

Der Stellungsanzeiger dient somit in vorteilhafter Weise als Benutzereingabeelement, über das ein Benutzer mittels einer Abnahme bzw. Anbringung des Stellungsanzeigers an dem axialen Ende der Abtriebswelle bewirken kann, dass der Drehantrieb einen vorbestimmten Betriebszustand einnimmt. Da der Stellungsrückmelder erfindungsgemäß in der Rohrkörperwandung vorgesehen ist und nicht, wie im Stand der Technik, auf dem Gehäuse neben oder über dem Stellungsanzeiger aufgebaut ist, liegt der Stellungsanzeiger frei und ist somit für den Benutzer gut greifbar und einfach auf das axiale Ende der Abtriebswelle aufsetzbar. Alternativ dazu kann der Stellungsanzeiger in dieser Ausgestaltung auch an einem anderen Ort als in der Rohrkörperwandung vorgesehen sein.

Die Abnahme bzw. Anbringung des Stellungsanzeigers an der Abtriebswelle wird insbesondere über das von dem Stellungsrückmelder erfasste Magnetfeld erkannt bzw. bestimmt.

Bei dem Kalibrierungszustand handelt es sich vorzugsweise um einen Zustand, in dem ein von dem Stellungsrückmelder erfasster Magnetfeldmesswert in Zuordnung zu wenigstens einer vorbestimmten Stellung, vorzugsweise einer Endstellung, abgespeichert wird. Bei dem Entlüftungszustand handelt es sich vorzugsweise um einen Zustand, in dem eine der Kammern des Drehantriebs entlüftet wird. Bei dem Wartungszustand handelt es sich vorzugsweise um einen Zustand, in dem eine dem Drehantrieb zugeordnete Steuerventilanordnung gesperrt ist, so dass die Abtriebswelle nicht von der Antriebskolbenanordnung angetrieben werden kann. Bei dem Not-Aus-Zustand handelt es sich vorzugsweise um einen Zustand, in dem die Abtriebswelle in eine vorbestimmte Stellung gefahren wird und/oder ein durch die Antriebskolbenanordnung auf die Abtriebswelle beaufschlagtes Drehmoment herabgesetzt wird.

In weiterer Ausgestaltung der Erfindung ist vorgesehen, dass die Magnetanordnung einen Permanentmagneten umfasst, der vorzugsweise ringförmig, insbesondere als Ringsegment, ausgebildet ist.

Insbesondere ist der ringförmige bzw. als Ringsegment ausgebildete Permanentmagnet dabei konzentrisch zu der Abtriebswelle angeordnet, so dass der Abstand zwischen dem Permanentmagneten und dem Stellungsrückmelder bei einer Drehung der Abtriebswelle zwischen den beiden Endstellungen der Abtriebswelle konstant bleibt. Der Permanentmagnet kann dabei insbesondere eine entlang seines Umfangs variierende Magnetisierung aufweisen.

In weiterer Ausgestaltung der Erfindung ist vorgesehen, dass die Magnetanordnung einen oder mehrere Magnetstäbe umfasst. Der Magnetstab bzw. die Magnetstäbe sind dabei vorzugsweise nicht koaxial zu der Abtriebswelle angeordnet.

In weiterer Ausgestaltung der Erfindung ist vorgesehen, dass der Stellungsrückmelder einen Hall-Sensor, vorzugsweise einen 3D-Hallsensor, umfasst.

Vorzugsweise bildet der Hall-Sensor bzw. der 3D-Hall-Sensor das vorstehend erwähnte Magnetfeldsensorelement und ist an dem Schaftabschnitt des Stellungsrückmelders angeordnet.

In weiterer Ausgestaltung der Erfindung ist vorgesehen, dass die Aufnahmekammer zu einer Stirnseite an einem axialen Ende des Rohrkörpers offen ist, an der Stirnseite eine Funktionsmodulanordnung angesetzt ist, und dass in der Funktionsmodulanordnung, vorzugsweise in einem oberen Wandungsabschnitt der Funktionsmodulanordnung, eine Aufnahmekammer ausgebildet ist, in die sich der Stellungsrückmelder hinein erstreckt.

Dadurch, dass sich der Stellungsrückmelder auch in die Funktionsmodulanordnung erstreckt, sind die Anforderungen an die Kompaktheit des Stellungsrückmelders geringer bzw. es kann ein größerer/längerer Stellungsrückmelder verwendet werden.

Die Funktionsmodulanordnung umfasst vorzugsweise eine Elektronikanordnung zur Überwachung, Steuerung und/oder Regelung des Drehantriebs und/oder eine Steuerventilanordnung zur Betätigung des Drehantriebs. Insbesondere ist dabei der Stellungsrückmelder mit der Elektronikanordnung verbunden und stellt dieser das Stellungssignal bereit.

Der Rohrkörper weist vorzugsweise einen Kolbenraum auf, in dem die Antriebskolbenanordnung angeordnet ist, und der an derselben Stirnseite des Rohrkörpers ausmündet, an der die Öffnung zu der Aufnahmekammer vorgesehen ist. Insbesondere schließt die Funktionsmodulanordnung dabei den Kolbenraum druckdicht ab und übernimmt so die Aufgabe eines Gehäusedeckels.

Vorzugsweise weist die Funktionsmodulanordnung denselben Querschnitt wie der Rohrkörper an seinem axialen Ende auf, so dass durch den Ansatz der Funktionsmodulanordnung an die Stirnseite der Rohrkörper hauptsächlich in Axialrichtung vergrößert wird. Insbesondere ist die Funktionsmodulanordnung ebenfalls als Rohrkörper ausgebildet. In einem Zustand, in dem der Drehantrieb auf einer Ventilarmatur aufgesetzt ist, sind die Axialrichtung und eine Verrohrungsrichtung der Ventilarmatur vorzugsweise parallel zueinander ausgerichtet.

Erfindungsgemäß wird ferner eine Prozessventilbaueinheit bereitgestellt, umfassend den vorstehend beschriebenen fluidbetätigten Drehantrieb und eine Ventilarmatur mit einer Spindel und einem Ventilglied, wobei der fluidbetätigte Drehantrieb auf die Ventilarmatur aufgesetzt ist, und das Ventilglied über die Spindel an die Abtriebswelle des fluidbetätigten Drehantriebs mechanisch angekoppelt ist, so dass die Stellung des Ventilglieds durch die Stellung der Abtriebswelle bestimmt wird.

Da die Stellung des Ventilglieds durch die Stellung der Abtriebswelle bestimmt wird, kann aus dem der Stellung der Abtriebswelle entsprechenden Stellungssignal auf die Stellung des Ventilgliedes geschlossen werden.

Beispielhafte Ausführungsformen der Erfindung sind in der Zeichnung dargestellt. Dabei zeigt
- Figur 1: eine perspektivische Darstellung eines Drehantriebs gemäß einer ersten Ausführungsform,
- Figur 2: eine perspektivische Darstellung des Drehantriebs gemäß der ersten Ausführungsform,
- Figur 3: eine perspektivische Schnittdarstellung des Drehantriebs gemäß der ersten Ausführungsform,
- Figur 4: eine perspektivische Darstellung eines Rohrkörpers des Drehantriebs gemäß der ersten Ausführungsform,
- Figur 5: eine Explosionsdarstellung des Drehantriebs gemäß der ersten Ausführungsform,
- Figur 6: eine perspektivische Darstellung des Drehantriebs gemäß einer zweiten Ausführungsform,
- Figur 7: eine perspektivische Schnittdarstellung eines Rohrkörpers des Drehantriebs gemäß der zweiten Ausführungsform,
- Figur 8: eine perspektivische Darstellung eines Stellungsanzeigers eines Drehantriebs gemäß der ersten und zweiten Ausführungsform,
- Figur 9: eine Ansicht von unten eines Stellungsanzeigers eines Drehantriebs gemäß der ersten und zweiten Ausführungsform,

- Figur 10: eine perspektivische Darstellung einer Prozessventilbaueinheit gemäß einer dritten Ausführungsform.
- Figur 11: eine perspektivische Darstellung einer Prozessventilbaueinheit gemäß einer vierten Ausführungsform.

In der nachstehenden Figurenbeschreibung werden für funktionsgleiche Komponenten der dargestellten Ausführungsformen jeweils gleiche Bezeichnungen verwendet, wobei auf eine mehrfache Beschreibung funktionsgleicher Komponenten verzichtet wird.

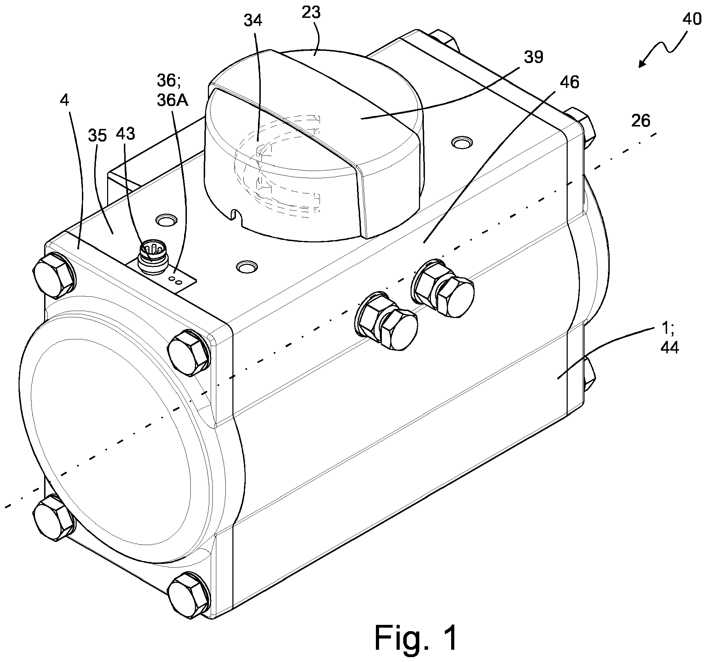

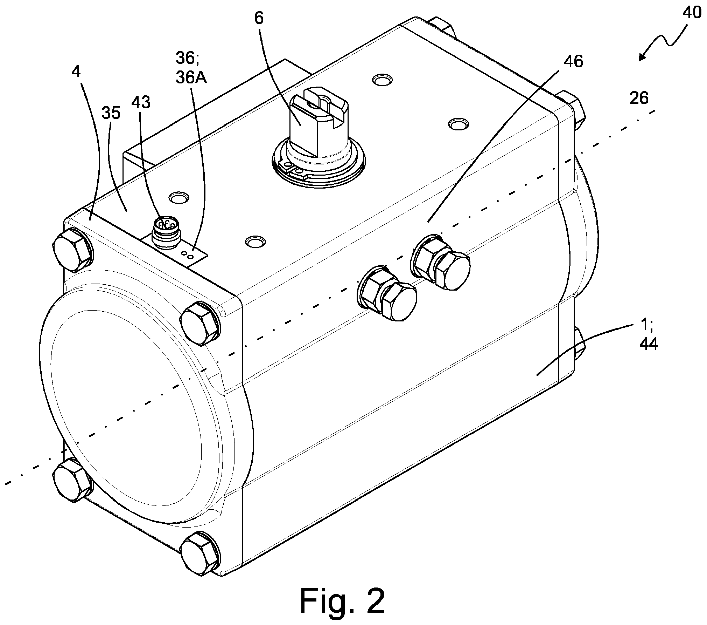

Die Figuren 1 bis 5 zeigen perspektivische Darstellungen eines Drehantriebs 40 gemäß einer ersten Ausführungsform. Die Figur 1 zeigt den Drehantrieb 40 dabei mit einem auf einem axialen Ende einer Abtriebswelle 6 aufgesetzten Stellungsanzeiger 23 und die Figur 2 zeigt den Drehantrieb 40 ohne den Stellungsanzeiger 23.

Der Drehantrieb 40 der ersten Ausführungsform ist dazu geeignet, auf eine Ventilarmatur 24 aufgesetzt zu werden, um ein Ventilglied der Ventilarmatur 24 zu betätigen und so einen Fluidstrom zu regeln.

Der Drehantrieb 40 der ersten Ausführungsform ist fluidbetätigt ausgebildet und weist ein Gehäuse 1 mit einem sich entlang einer Axialrichtung 26 erstreckenden Rohrkörper 44 auf. In dem Rohrkörper 44 ist eine Antriebskolbenanordnung 19 zum Antrieb einer drehbar gelagerten Abtriebswelle 6 vorgesehen, die senkrecht zu Axialrichtung 26 durch den Rohrkörpers 44 verläuft und deren axiales Ende an einem oberen Wandungsabschnitt 35 des Rohrkörpers 44 aus dem Rohrkörper 44 herausgeführt wird.

Der fluidbetätigte Drehantrieb weist ferner eine an dem axialen Ende angeordnete, eine Drehbewegung der Abtriebswelle 6 aufnehmende Magnetanordnung 34 auf. Im gezeigten Beispiel ist die Magnetanordnung 34 in einem Stellungsanzeiger 23 angebracht, der wiederum an dem axialen Ende der Abtriebswelle 6 angebracht ist. Die Magnetanordnung 34 ist somit mittels des Stellungsanzeigers 23 drehfest mit der Abtriebswelle 6 verbunden.

Der fluidbetätigte Drehantrieb 40 weist ferner einen Stellungsrückmelder 36 auf, der ausgebildet ist, dass von der Magnetanordnung 34 erzeugte Magnetfeld zu erfassen und in Abhängigkeit von dem erfassten Magnetfeld ein einer Stellung der Abtriebswelle 6 entsprechendes Stellungssignal bereitzustellen. Im gezeigten Beispiel umfasst der Stellungsrückmelder 36 einen Anschluss 43, über welchen vorzugsweise das Stellungssignal ausgegeben werden kann.

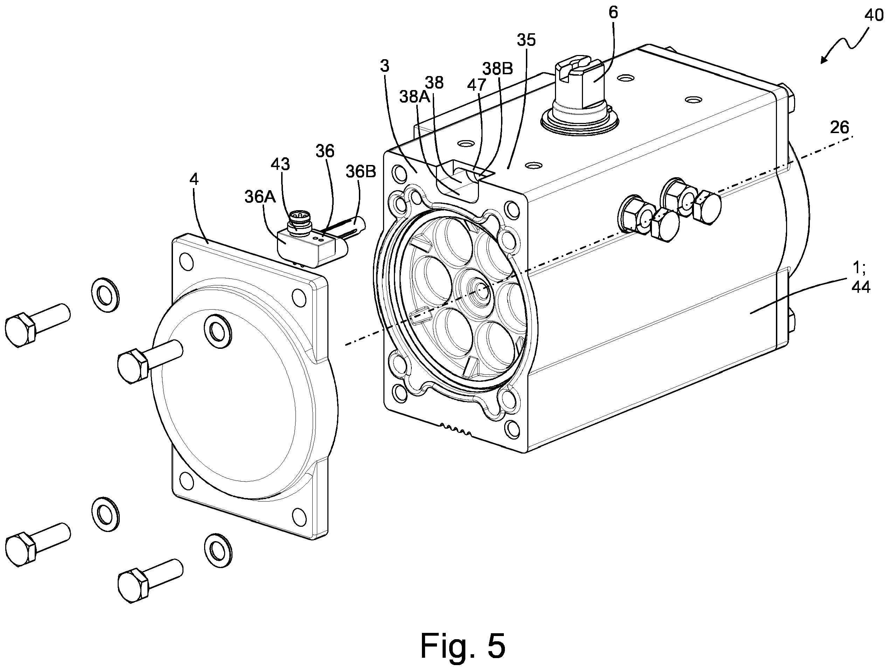

Der Stellungsrückmelder 36 ist in einer in dem oberen Wandungsabschnitt 35 des Rohrkörpers 44 ausgebildeten Aufnahmekammer 38 angeordnet bzw. eingesetzt. Die Aufnahmekammer 38 ist zum Beispiel in der in der Figur 5 gezeigten Explosionsdarstellung des Drehantriebs 40 zu sehen.

Durch die Anordnung des Stellungsrückmelders 36 in der Aufnahmekammer 38 in dem Wandungsabschnitt 35 wird eine sehr kompakte Bauweise des Drehantriebs 40 erzielt. Insbesondere wird dabei der Bauraum des Drehantriebs 40 durch den Stellungsrückmelder 36 kaum bzw. nicht vergrößert.

Die Aufnahmekammer 38 ist, wie beispielsweise in der Figur 5 gezeigt, zu der Stirnseite 3 des Rohrkörpers 44 offen. Dadurch kann der Stellungsrückmelder 36 in besonders einfacher Weise in die Aufnahmekammer 38 eingesetzt werden. Alternativ zu der gezeigten Bauweise ist es aber auch möglich, dass die Aufnahmekammer 38 zu einer Seitenwand 46 des Rohrkörpers 44 offen ist.

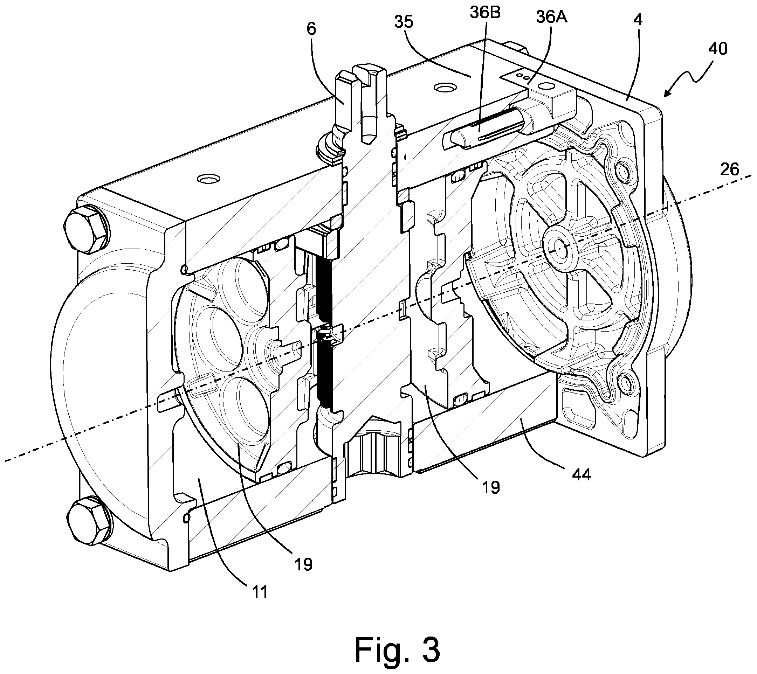

Wie in den Figuren 3 und 5 zu sehen, ist die Aufnahmekammer 38 länglich ausgebildet und zu dem axialen Ende der Abtriebswelle 6 hin ausgerichtet. In der gezeigten Ausbildung, in der die Aufnahmekammer 38 zu der Stirnseite 3 hin offen ist, erstreckt sich die Aufnahmekammer 38 in der Axialrichtung 26 des Rohrkörpers.

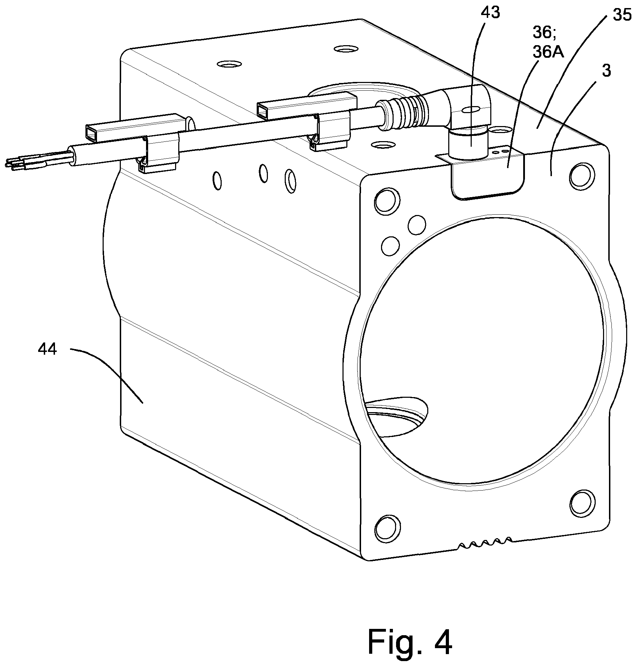

In dem in der Figur 5 gezeigten Beispiel mündet die Aufnahmekammer über Eck sowohl an dem oberen Wandungsabschnitt 35 als auch an der Stirnseite 3 aus. Dadurch ist der Stellungsrückmelder 36 besonders einfach einsetzbar und der Anschluss 43 des Stellungsrückmelders kann nach oben, also in einer Richtung parallel zur Abtriebswelle, aus der Aufnahmekammer 38 herausgeführt werden. Die Figur 4 zeigt diese Ausgestaltung der Aufnahmekammer 38 aus einer anderen Perspektive.

An der Stirnseite 3 ist ein Gehäusedeckel 4 angesetzt, der die Aufnahmekammer 38 zur Stirnseite 3 hin abdeckt und den Stellungsrückmelder 36 so in der Aufnahmekammer 38 hält. Der Stellungsrückmelder 36 kann alternativ oder zusätzlich auch mittels eigener Befestigungsmittel in der Aufnahmekammer 38 bzw. an dem Rohrkörper 44 befestigt werden.

Wie in der Figur 3 zu sehen, weist der Stellungsrückmelder 36 einen länglichen Schaftabschnitt 36B und einen Kopfabschnitt 36A auf. Der Querschnitt des Kopfabschnitts 36A ist dabei breiter und höher ausgebildet als der Querschnitt des Schaftabschnitts 36B. An dem Schaftabschnitt 36B ist vorzugsweise ein Magnetfeldsensorelement zur Messung einer Magnetfeldstärke des von der Magnetanordnung 34 erzeugten Magnetfelds angeordnet. Der Kopfabschnitt 36A umfasst vorzugsweise eine Auswerteelektronik zur Verarbeitung eines von dem Magnetfeldsensorelement erfassten Magnetfeldmesswerts und zur Bereitstellung bzw. Ausgabe eines Stellungssignals basierend auf dem Magnetfeldmesswert.

In Entsprechung zu den Abschnitten des Stellungsrückmelders 36 weist die Aufnahmekammer 38 einen länglichen zweiten Abschnitt 38B und einen breiter und höher als der zweite Abschnitt 38B ausgebildeten ersten Abschnitt 38A auf. Der erste Abschnitt 38A ist dabei zu der Stirnseite 3 des Rohrkörpers 44 hin angeordnet, und der zweite Abschnitt 38B ist zwischen dem ersten Abschnitt 38A und dem axialen Ende der Abtriebswelle 6 angeordnet bzw. erstreckt sich in Richtung des axialen Endes der Abtriebswelle 6. Der erste Abschnitt 38A nimmt den Kopfabschnitt 36A und der zweite Abschnitt 38B den Schaftabschnitt 36B auf.

Wie in der Figur 5 ferner gezeigt, mündet der zweite Abschnitt 38B in einer Rückwand 47 des ersten Abschnitts 38A aus. Der verbleibende Abschnitt der Rückwand 47 bildet eine Anlagefläche, an der der Kopfabschnitt 36A anliegen kann. Der Kopfabschnitt 36A kann somit zwischen dem Gehäusedeckel 4 und der Rückwand 47 verspannt werden.

Wie in der Figur 1 gezeigt, ist auf dem axialen Ende der Abtriebswelle 6 ein zylindrischer bzw. scheibenförmiger Stellungsanzeiger 23 aufgesetzt. In dem Stellungsanzeiger 23 ist die als Ringsegment ausgebildete Magnetanordnung 34 konzentrisch zu der Axialrichtung der Abtriebswelle 6 angeordnet. Die Magnetanordnung 34 ist an einem unteren Abschnitt des Stellungsanzeigers 23 und damit in der Nähe des oberen Wandungsabschnitts 35 bzw. des darin angeordneten Stellungsrückmelders 36 angeordnet.

Der Stellungsanzeiger 23 weist ferner ein bügelförmiges Anzeigeelement 39 auf, das quer über die Oberfläche des Stellungsanzeigers 23 verläuft. Da der Stellungsanzeiger 23 drehfest mit der Abtriebswelle 6 verbunden ist, kann mittels des Anzeigeelements 39 die Stellung der Abtriebswelle 6 visuell angezeigt werden.

Vorzugsweise ist der Stellungsanzeiger 23 abnehmbar an der Abtriebswelle 6 angebracht. Eine Abnahme bzw. Anbringung der Stellungsanzeigers 23 an der Abtriebswelle 6 kann mittels des Stellungsrückmelders 36 erfasst und von diesem oder einer anderen dem Drehantrieb zugehörigen Steuereinheit als Benutzereingabe interpretiert werden. Insbesondere ist der Drehantrieb 40 ausgebildet, bei erfasster Anbringung des Stellungsanzeigers 23 an die Abtriebswelle 6 einen Kalibrierungszustand einzunehmen, in dem die den Endstellungen der Abtriebswelle entsprechenden Magnetfeldmesswerte bestimmt und abgespeichert werden.

In der Figur 3 ist die in einem Kolbenraum 11 angeordnete und aus zwei Antriebskolben bestehende Antriebskolbenanordnung 19 zu sehen. Die beiden Antriebskolben umfassen jeweilige hier nicht gezeigte, in Axialrichtung ausgerichtete Zahnstangen, die mit einem an der Abtriebswelle 6 angeordneten Abtriebsritzel in kämmendem Eingriff stehen, um eine Linearbewegung der Antriebskolben in eine Drehbewegung der Abtriebswelle 6 umzusetzen. Insbesondere sind dabei die Zahnstangen an entgegengesetzten Seiten der Abtriebswelle 6 angeordnet, so dass gegenläufige Linearbewegungen der Antriebskolben in jeweilige Drehbewegungen der Abtriebswelle 6 umgesetzt werden. So dreht sich die Abtriebswelle 6 in einer ersten Drehrichtung, wenn die Antriebskolben aufeinander zu laufen, und in einer zweiten Drehrichtung, wenn sich die Antriebskolben voneinander wegbewegen. Alternativ zu der Anordnung aus Zahnstangen und Abtriebsritzel kann auch eine Hebel-Schwinge (Scotch-Yoke) verwendet werden, um die Linearbewegung der Antriebskolbenanordnung 19 in eine Drehbewegung der Abtriebswelle 6 umzusetzen.

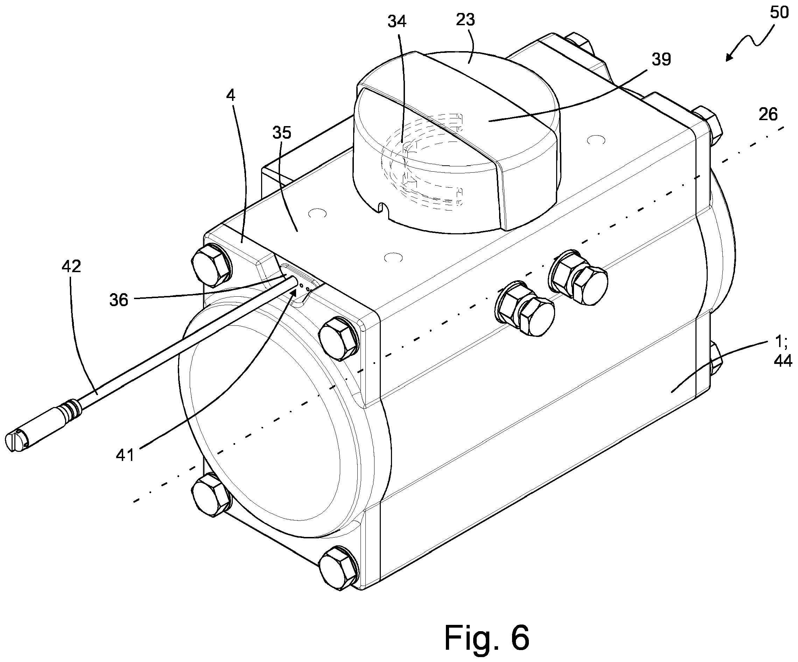

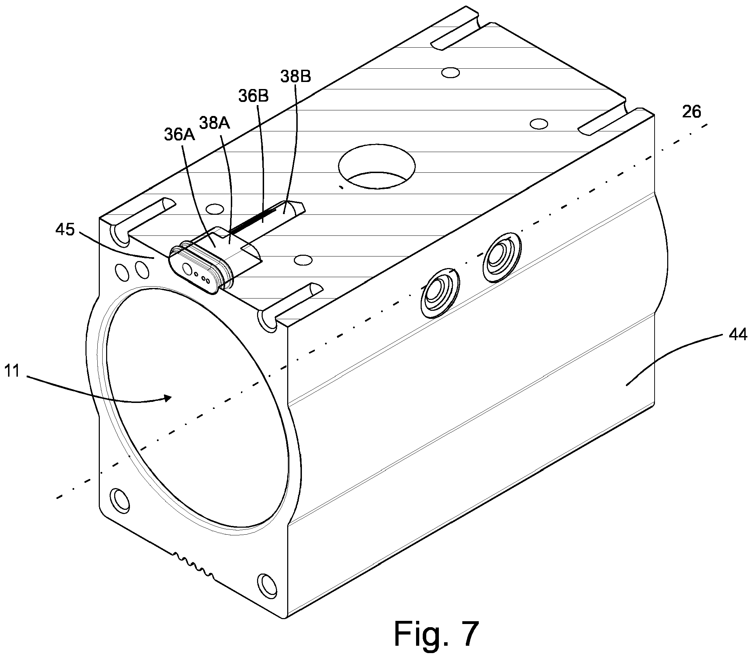

Die Figuren 6 und 7 zeigen einen fluidbetätigten Drehantrieb 50 gemäß einer zweiten Ausführungsform der Erfindung. Die zweite Ausführungsform entspricht im Wesentlichen der ersten Ausführungsform; unterscheidet sich jedoch von dieser insbesondere dadurch, dass in der zweiten Ausführungsform der Anschluss bzw. ein Anschlusskabel 42 des Stellungsrückmelders 36 durch eine Öffnung in der Stirnseite 3 aus der Aufnahmekammer 38 herausgeführt wird. Zu diesem Zweck ist an dem Gehäusedeckel eine Aussparung 41 vorgesehen, die die Öffnung in der Stirnseite 3 zu der Aufnahmekammer 38 freigibt.

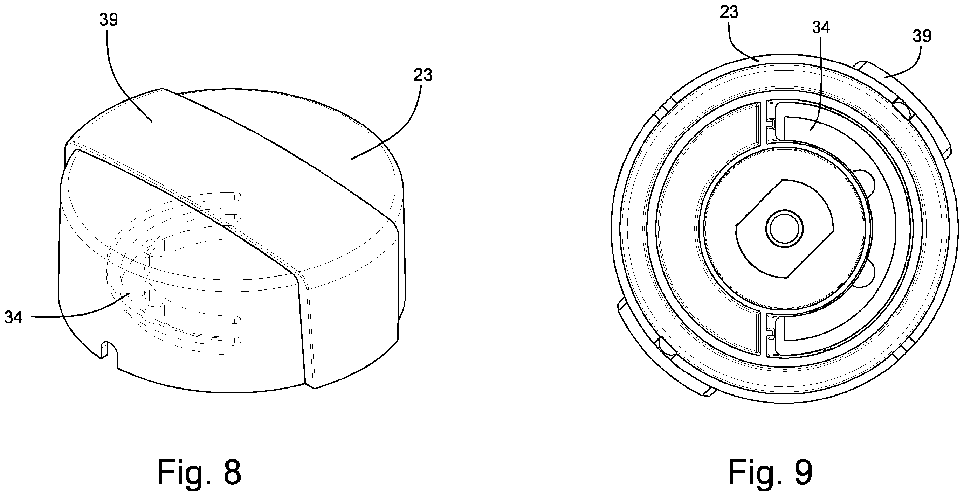

Die Figuren 8 und 9 zeigen den Stellungsanzeiger 23. Wie vorstehend beschrieben, umfasst der Stellungsanzeiger 23 ein bügelförmiges Anzeigeelement 39 und die als Ringsegment ausgebildete Magnetanordnung 34. Vorzugsweise variiert dabei die Magnetisierung der Magnetanordnung 34 entlang des Umfangs des Ringsegments.

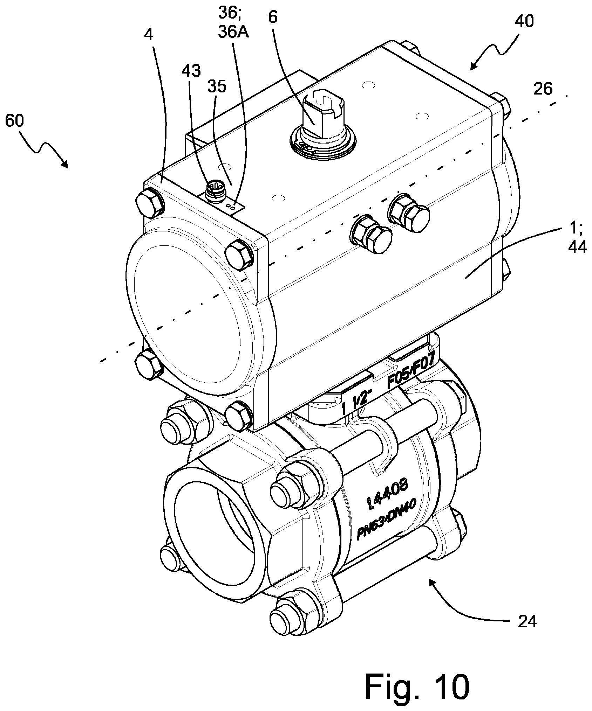

Die Figur 10 zeigt eine Prozessventilbaueinheit 60 gemäß einer dritten Ausführungsform. In dem gezeigten Beispiel umfasst die Prozessventilbaueinheit 60 einen Drehantrieb 40 gemäß der ersten Ausführungsform. Alternativ dazu kann die Prozessventilbaueinheit 60 auch einen Drehantrieb 50 gemäß der zweiten Ausführungsform umfassen.

Der Drehantrieb 40 sitzt auf einer Ventilarmatur 24, die eine Spindel und ein Ventilglied aufweist. Die Abtriebswelle 6 ist über die Spindel mit dem Ventilglied der Ventilarmatur 24 drehfest verbunden. Die Winkelstellung des Ventilglieds wird dementsprechend von der Winkelstellung der Abtriebswelle 6 bestimmt. Folglich kann aus dem von dem Stellungsrückmelder 36 bereitgestellten, der Stellung der Abtriebswelle 6 entsprechenden Stellungssignal auf die Stellung des Ventilglieds geschlossen werden.

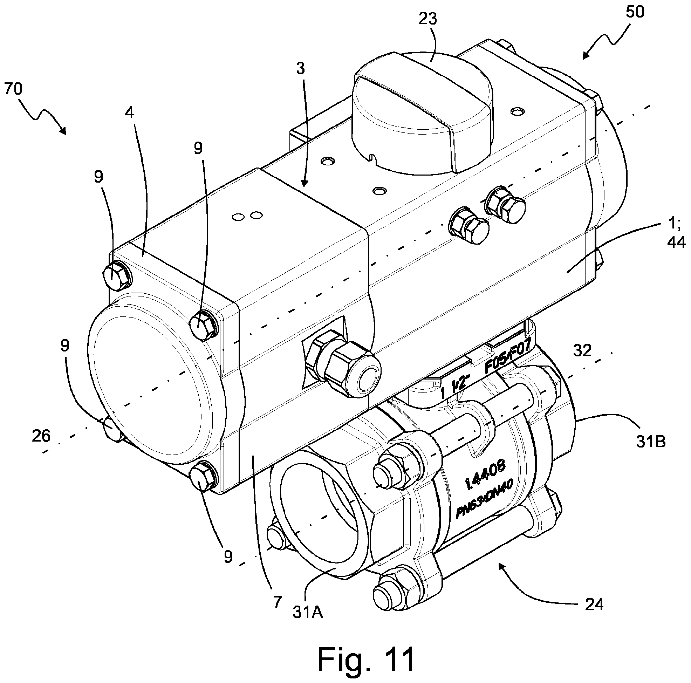

Die Figur 11 zeigt eine Prozessventilbaueinheit 70 gemäß einer vierten Ausführungsform. In dem gezeigten Beispiel umfasst die Prozessventilbaueinheit 70 einen Drehantrieb 50 gemäß der zweiten Ausführungsform. Alternativ dazu kann die Prozessventilbaueinheit 70 auch einen Drehantrieb 40 gemäß der ersten Ausführungsform umfassen.

Die vierte Ausführungsform entspricht im Wesentlichen der dritten Ausführungsform; unterscheidet sich jedoch von dieser insbesondere dadurch, dass zwischen der Stirnseite 3 des Rohrkörpers 44 und dem Gehäusedeckel 4 eine Funktionsmodulanordnung 7 angeordnet ist. Zudem weist der Gehäusedeckel 4 hier keine Aussparung auf und ist mittels der Befestigungsschrauben 9 an der Funktionsmodulanordnung 7 befestigt.

Die Aufnahmekammer 38 ist hier zu der Funktionsmodulanordnung 7 hin offen, und der Stellungsrückmelder 36 erstreckt sich in die Funktionsmodulanordnung 7 hinein. Vorzugsweise ist dafür in einem oberen Wandungsabschnitt der Funktionsmodulanordnung 7 eine Aufnahmekammer vorgesehen.

Die Funktionsmodulanordnung 7 verlängert den Bauraum des Drehantriebs 50 in der axialen Richtung 26. Die Ventilarmatur 24, auf die der Drehantrieb 50 aufgesetzt ist, weist zwei Verrohrungsanschlüsse 31A und 31B auf, die koaxial zueinander entlang einer Verrohrungsrichtung 32 angeordnet sind. Die Verrohrungsrichtung 32 verläuft parallel zu der Axialrichtung 26. Dadurch wird eine Prozessventilbaueinheit mit einer besonders kompakten Bauweise erzielt.

Im Betrieb wird die Prozessventilbaueinheit 70 von einer an einem externen Druckanschluss des Drehantriebs 50 angeschlossenen Leitung mit Druckluft versorgt. Die Druckluft wird durch eine beispielsweise in der Funktionsmodulanordnung 7 vorgesehenen Steuerventilanordnung geschleift, die insbesondere als 5/3-Wegeventil ausgebildet ist. Die Ausgänge der Steuerventilanordnung sind über entsprechende Arbeitskanäle mit Kammern des Kolbenraums 11 verbunden. Die Ausgänge der Steuerventilanordnung werden gemäß einem Steuerbefehl auf einen Druck- oder Entlüftungszustand geschaltet, um so die Antriebskolben der Antriebskolbenanordnung 19 in ihrer aktuellen bzw. einer definierten Stellung zu halten oder aufeinander zu bzw. voneinander weg zu bewegen. Der Steuerbefehl wird beispielsweise von einer vorzugsweise in der Funktionsmodulanordnung 7 angeordneten Elektronikanordnung an die Steuerventilanordnung ausgegeben. Alternativ dazu kann der Steuerbefehl auch von dem Stellungsrückmelder 36 ausgegeben werden. Durch die Bewegung der Antriebskolben der Antriebskolbenanordnung 19 wird die Abtriebswelle 6 gedreht, wodurch wiederum die Spindel der Ventilarmatur 24 und schließlich das Ventilglieds der Ventilarmatur 24 gedreht bzw. betätigt wird.

Der mit der Abtriebswelle 6 drehfest verbundene Stellungsanzeiger 23 nimmt die Drehbewegung der Abtriebswelle 6 auf, sodass die Lage bzw. die Position der Magnetanordnung 34 relativ zu dem Stellungsrückmelder 36 verändert wird. Dementsprechend verändert sich auch das vom Stellungsrückmelder erfasste Magnetfeld. Basierend auf dem erfassten Magnetfeld stellt der Stellungsrückmelder 36 ein der Stellung der Abtriebswelle 6 bzw. des Ventilglieds entsprechendes Stellungssignal bereit.

## Patentansprüche

1. Fluidbetätigter Drehantrieb (40, 50), mit einem Gehäuse (1), das einen sich entlang einer Axialrichtung (26) erstreckenden Rohrkörper (44) aufweist, in dem eine Antriebskolbenanordnung (19) zum Antrieb einer drehbar gelagerten Abtriebswelle (6) vorgesehen ist, die senkrecht zur Axialrichtung (26) durch den Rohrkörper (44) verläuft und deren axiales Ende an einem oberen Wandungsabschnitt (35) des Rohrkörpers (44) aus dem Rohrkörper (44) herausgeführt wird, mit einer dem axialen Ende der Abtriebswelle (6) zugehörige, eine Drehbewegung der Abtriebswelle (6) aufnehmenden Magnetanordnung (34), und mit einem Stellungsrückmelder (36), der ausgebildet ist, das von der Magnetanordnung (34) erzeugte Magnetfeld zu erfassen und in Abhängigkeit von dem erfassten Magnetfeld ein einer Stellung der Abtriebswelle (6) entsprechendes Stellungssignal bereitzustellen, **dadurch gekennzeichnet, dass** der Stellungsrückmelder (36) in einer in dem oberen Wandungsabschnitt (35) des Rohrkörpers (44) ausgebildeten Aufnahmekammer (38) angeordnet ist.

2. Fluidbetätigter Drehantrieb (40) nach Anspruch 1, **dadurch gekennzeichnet, dass** die Aufnahmekammer (38) zu einer Stirnseite (3) und/oder einer Längsseite (46) des Rohrkörpers (44) offen ist.

3. Fluidbetätigter Drehantrieb (50) nach Anspruch 2, **dadurch gekennzeichnet, dass** an der Stirnseite (3) ein Gehäusedeckel (4) angesetzt ist, der eine Aussparung (41) aufweist, durch welche ein Anschluss und/oder ein Anschlusskabel zu dem Stellungsrückmelder (36) geführt ist.

4. Fluidbetätigter Drehantrieb (40) nach Anspruch 1 oder 2, **dadurch gekennzeichnet, dass** an der Stirnseite (3) ein Gehäusedeckel (4) angesetzt ist, der die Aufnahmekammer (38) zur Stirnseite (3) hin abdeckt und vorzugsweise den Stellungsrückmelder (36) in der Aufnahmekammer (38) hält.

5. Fluidbetätigter Drehantrieb (40, 50) nach einem der Ansprüche 1 bis 4, **dadurch gekennzeichnet, dass** der Stellungsrückmelder (36) einen länglichen, vorzugsweise ein Magnetfeldsensorelement aufweisenden, Schaftabschnitt (36B) und einen Kopfabschnitt (36A) umfasst, wobei der Querschnitt des Kopfabschnitts (36A) breiter und/oder höher als der Querschnitt des Schaftabschnitts (36B) ist.

6. Fluidbetätigter Drehantrieb (40, 50) nach Anspruch 5, **dadurch gekennzeichnet, dass** die Aufnahmekammer (38) einen ersten Abschnitt (38A) aufweist, der zu der Stirnseite (3) des Rohrkörpers (44) offen ist und den Kopfabschnitt (36A) aufnimmt, und einen zweiten Abschnitt (38B) aufweist, der in einer Rückwand (47) des ersten Abschnitts (38A) ausmündet und den Schaftabschnitt (36B) aufnimmt.

7. Fluidbetätigter Drehantrieb (40, 50) nach Anspruch 6, **dadurch gekennzeichnet, dass** der Querschnitt des Kopfabschnitts (36A) breiter und/oder höher als der Querschnitt des zweiten Abschnitts (38B) ist, so dass der Kopfabschnitt (36A) an der Rückwand (47) des ersten Abschnitts (38A) anliegt.

8. Fluidbetätigter Drehantrieb (40, 50) nach einem der voranstehenden Ansprüche, **gekennzeichnet durch** einen auf das axiale Ende der Abtriebswelle (6) aufgesetzten Stellungsanzeiger (23), in dem die Magnetanordnung (34) angeordnet ist.

9. Fluidbetätigter Drehantrieb (40, 50) nach Anspruch 8, **dadurch gekennzeichnet, dass** der Stellungsanzeiger (23) ein Anzeigeelement (39), vorzugsweise eine Markierung, zur visuellen Anzeige einer Stellung der Abtriebswelle (6) aufweist.

10. Fluidbetätigter Drehantrieb (40, 50) nach Anspruch 8 oder 9, **dadurch gekennzeichnet, dass** der Stellungsanzeiger (23) abnehmbar an der Abtriebswelle (6) angebracht ist und der Drehantrieb ausgebildet ist, bei einer mittels des Stellungsrückmelders (36) erfassten Abnahme und/oder Anbringung des Stellungsanzeigers (23) einen vorbestimmten Betriebszustand, vorzugsweise wenigstens einen aus einem Kalibrierungszustand, einem Entlüftungszustand, einem Not-Aus-Zustand und/oder einem Wartungszustand einzunehmen.

11. Fluidbetätigter Drehantrieb (40, 50) nach einem der voranstehenden Ansprüche, **dadurch gekennzeichnet, dass** die Magnetanordnung (34) einen Permanentmagneten umfasst, der vorzugsweise ringförmig, insbesondere als Ringsegment, ausgebildet ist.

12. Fluidbetätigter Drehantrieb nach einem der voranstehenden Ansprüche, **dadurch gekennzeichnet, dass** die Magnetanordnung (34) einen oder mehrere Permanentmagnetstäbe umfasst.

13. Fluidbetätigter Drehantrieb (40, 50) nach einem der voranstehenden Ansprüche, **dadurch gekennzeichnet, dass** der Stellungsrückmelder (36) einen Hall-Sensor, vorzugsweise einen 3D-Hallsensor, umfasst.

14. Fluidbetätigter Drehantrieb nach einem der voranstehenden Ansprüche, **dadurch gekennzeichnet, dass** die Aufnahmekammer (38) zu einer Stirnseite (3) an einem axialen Ende des Rohrkörpers offen ist, an der Stirnseite (3) eine Funktionsmodulanordnung (7) angesetzt ist, und dass in der Funktionsmodulanordnung (7), vorzugsweise in einem oberen Wandungsabschnitt der Funktionsmodulanordnung (7), eine Aufnahmekammer ausgebildet ist, in die sich der Stellungsrückmelder hinein erstreckt.

15. Prozessventilbaueinheit (50, 60), umfassend einen fluidbetätigten Drehantrieb (40, 50) nach einem der Ansprüche 1 bis 14 und eine Ventilarmatur (24) mit einer Spindel und einem Ventilglied, wobei der fluidbetätigte Drehantrieb (40) auf die Ventilarmatur (24) aufgesetzt ist, und das Ventilglied über die Spindel an die Abtriebswelle (6) des fluidbetätigten Drehantriebs (40) mechanisch angekoppelt ist, so dass die Stellung des Ventilglieds durch die Stellung der Abtriebswelle (6) bestimmt wird.

## Claims

1. Fluid-actuated rotary actuator (40, 50), comprising a housing (1) having a tubular body (44) extending in an axial direction, in which is provided a drive piston assembly (19) for driving a rotatably mounted output shaft (6), which extends perpendicular to the axial direction (26) through the tubular body (44) and the axial end of which is routed out of the tubular body (44) at an upper wall section (35) of the tubular body (44), further comprising a magnet assembly (34) associated with the axial end of the output shaft (6) and receiving a rotary movement of the output shaft (6), and further comprising a position feedback device (36) configured to detect the magnetic field generated by the magnet assembly (34) and to provide, in accordance with the detected magnetic field, a position signal corresponding to a position of the output shaft (6), **characterised in that** the position feedback device (36) is located in a receptacle chamber (38) formed in the upper wall section (35) of the tubular body (44).

2. Fluid-actuated rotary actuator (40) according to claim 1, **characterised in that** the receptacle chamber (38) is open towards an end face (3) and/or a longitudinal side (46) of the tubular body (44).

3. Fluid-actuated rotary actuator (50) according to claim 1, **characterised in that** a housing cover (4) having a recess (41) through which a connector and/or a cable is/are routed to the position feedback device (36) is placed on the end face (3).

4. Fluid-actuated rotary actuator (40) according to claim 1 or 2, **characterised in that** a housing cover (4), which covers the receptacle chamber (38) towards the end face (3) and preferably holds the position feedback device (36) in the receptacle chamber (38), is placed on the end face (3).

5. Fluid-actuated rotary actuator (40, 50) according to any of claims 1 to 4, **characterised in that** the position feedback device (36) comprises an oblong shaft section (36B), which preferably comprises a magnetic field sensor element, and a head section (36A), the cross-section of the head section (36A) being wider and/or higher than the cross-section of the shaft section (36B).

6. Fluid-actuated rotary actuator (40, 50) according to claim 5, **characterised in that** the receptacle chamber (38) has a first section (38A), which is open towards the end face (3) of the tubular body (44) and accommodates the head section (36A), and a second section (38B), which opens out at a rear wall (47) of the first section (38A) and accommodates the shaft section (36B).

7. Fluid-actuated rotary actuator (40, 50) according to claim 6, **characterised in that** the cross-section of the head section (36A) is wider and/or higher than the cross-section of the second section (38B), so that the head section (36A) abuts the rear wall (47) of the first section (38A).

8. Fluid-actuated rotary actuator (40, 50) according to any of the preceding claims, **characterised by** a position indicator (23), which is placed on the axial end of the output shaft (6) and in which the magnet assembly (34) is located.

9. Fluid-actuated rotary actuator (40, 50) according to claim 8, **characterised in that** the position indicator (23) has an indicating element (39), preferably a marking, for the visual indication of a position of the output shaft (6).

10. Fluid-actuated rotary actuator (40, 50) according to claim 8 or 9, **characterised in that** the position indicator (23) is removably mounted on the output shaft (6) and the rotary actuator is configured to adopt a predetermined operating state, preferably at least one calibration state, a venting state, an emergency shut-down state and/or a maintenance state, if the position feedback device (36) detects a removal and/or attachment of the position indicator (23).

11. Fluid-actuated rotary actuator (40, 50) according to any of the preceding claims, **characterised in that** the magnet assembly (34) comprises a permanent magnet which is preferably designed to be annular, in particular as an annular segment.

12. Fluid-actuated rotary actuator according to any of the preceding claims, **characterised in that** the magnet assembly (34) comprises one or more magnet bars.

13. Fluid-actuated rotary actuator (40, 50) according to any of the preceding claims, **characterised in that** the position feedback device (36) comprises a Hall sensor, preferably a 3D Hall sensor.

14. Fluid-actuated rotary actuator according to any of the preceding claims, **characterised in that** the receptacle chamber (38) is open towards an end face (3) at an axial end of the tubular body, **in that** a functional module assembly (7) is placed on the end face (3), and **in that** a receptacle chamber into which the position feedback device projects is formed in the functional module assembly (7), preferably in an upper wall section of the functional module assembly (7).

15. Process valve unit (50, 60), comprising a fluid-actuated rotary actuator (40, 50) according to any of claims 1 to 14 and a valve fitting (24) with a spindle and a valve member, wherein the fluid-actuated rotary actuator (40) is mounted on the valve fitting (24) and the valve member is mechanically coupled to the output shaft (6) of the fluid-actuated rotary actuator (40) via the spindle, so that the position of the valve member is determined by the position of the output shaft (6).

## Revendications

1. Entraînement rotatif (40, 50) à actionnement fluidique, avec un boîtier (1), qui présente un corps tubulaire (44) s'étendant le long d'une direction axiale (26), dans lequel un ensemble de pistons d'entraînement (19) servant à entraîner un arbre de sortie (6) monté de manière rotative est prévu, qui s'étend de manière perpendiculaire par rapport à la direction axiale (26) à travers le corps tubulaire (44) et dont l'extrémité axiale est guidée de manière à sortir du corps tubulaire (44) au niveau d'une section de paroi supérieure (35) du corps tubulaire (44), avec un ensemble magnétique (34) associé à l'extrémité axiale de l'arbre de sortie (6), recevant un mouvement de rotation de l'arbre de sortie (6), et avec un système de renvoi de position (36), qui est réalisé pour détecter le champ magnétique généré par l'ensemble magnétique (34) et pour fournir en fonction du champ magnétique détecté un signal de position correspondant à une position de l'arbre de sortie (6), **caractérisé en ce que** le système de renvoi de position (36) est disposé dans une chambre de logement (38) réalisée dans la section de paroi supérieure (35) du corps tubulaire (44).

2. Entraînement rotatif (40) à actionnement fluidique selon la revendication 1, **caractérisé en ce que** la chambre de logement (38) est ouverte en direction d'un côté frontal (3) et/ou d'un côté longitudinal (46) du corps tubulaire (44).

3. Entraînement rotatif (50) à actionnement fluidique selon la revendication 2, **caractérisé en ce qu'**est placé au niveau du côté frontal (3) un couvercle de boîtier (4), qui présente un évidement (41), à travers lequel un raccord et/ou un câble de raccord sont guidés vers le système de renvoi de position (36).

4. Entraînement rotatif (40) à actionnement fluidique selon la revendication 1 ou 2, **caractérisé en ce qu'**est placé au niveau du côté frontal (3) un couvercle de boîtier (4), qui recouvre la chambre de logement (38) en direction du côté frontal (3), et de préférence maintient le système de renvoi de position (36) dans la chambre de logement (38).

5. Entraînement rotatif (40, 50) à actionnement fluidique selon l'une quelconque des revendications 1 à 4, **caractérisé en ce que** le système de renvoi de position (36) comprend une section de tige (36B) allongée, présentant de préférence un élément de capteur de champ magnétique, et une section de tête (36A), dans lequel la section transversale de la section de tête (36A) est plus large et/ou plus haute que la section transversale de la section de tige (36B).

6. Entraînement rotatif (40, 50) à actionnement fluidique selon la revendication 5, **caractérisé en ce que** la chambre de logement (38) présente une première section (38A), qui est ouverte en direction du côté frontal (3) du corps tubulaire (44) et loge la section de tête (36A), et présente une deuxième section (38B), qui débouche dans une paroi arrière (47) de la première section (38A) et loge la section de tige (36B).

7. Entraînement rotatif (40, 50) à actionnement fluidique selon la revendication 6, **caractérisé en ce que** la section transversale de la section de tête (36A) est plus large et/ou plus haute que la section transversale de la deuxième section (38B) de sorte que la section de tête (36A) repose au niveau de la paroi arrière (47) de la première section (38A).

8. Entraînement rotatif (40, 50) à actionnement fluidique selon l'une quelconque des revendications précédentes, **caractérisé par** un indicateur de position (23) placé sur l'extrémité axiale de l'arbre de sortie (6), dans lequel l'ensemble magnétique (34) est disposé.

9. Entraînement rotatif (40, 50) à actionnement fluidique selon la revendication 8, **caractérisé en ce que** l'indicateur de position (23) présente un élément d'indication (39), de préférence un marquage, servant à indiquer visuellement une position de l'arbre de sortie (6).

10. Entraînement rotatif (40, 50) à actionnement fluidique selon la revendication 8 ou 9, **caractérisé en ce que** l'indicateur de position (23) est mis en place de manière à pouvoir être retiré au niveau de l'arbre de sortie (6) et l'entraînement rotatif est réalisé pour prendre lors d'un retrait et/ou d'une mise en place détecté(e) au moyen du système de renvoi de position (36), un état de fonctionnement prédéfini, de préférence au moins un état parmi un état d'étalonnage, un état d'évacuation de l'air, un état d'arrêt d'urgence et/ou un état de maintenance.

11. Entraînement rotatif (40, 50) à actionnement fluidique selon l'une quelconque des revendications précédentes, **caractérisé en ce que** l'ensemble magnétique (34) comprend un aimant permanent, qui est réalisé de préférence de forme annulaire, en particulier sous la forme d'un segment annulaire.

12. Entraînement rotatif à actionnement fluidique selon l'une quelconque des revendications précédentes, **caractérisé en ce que** l'ensemble magnétique (34) comprend une ou plusieurs barres à aimant permanent.

13. Entraînement rotatif (40, 50) à actionnement fluidique selon l'une quelconque des revendications précédentes, **caractérisé en ce que** le système de renvoi de position (36) comprend un capteur à effet Hall, de préférence un capteur à effet Hall 3D.

14. Entraînement rotatif à actionnement fluidique selon l'une quelconque des revendications précédentes, **caractérisé en ce que** la chambre de logement (38) est ouverte en direction d'un côté frontal (3) au niveau d'une extrémité axiale du corps tubulaire, un ensemble de modules fonctionnels (7) est placé au niveau du côté frontal (3), et qu'une chambre de logement est réalisée dans l'ensemble de modules fonctionnels (7), de préférence dans une section de paroi supérieure de l'ensemble de modules fonctionnels (7), à l'intérieur de laquelle le système de renvoi de position s'étend.

15. Unité modulaire de soupape de processus (50, 60), comprenant un entraînement rotatif (40, 50) à actionnement fluidique selon l'une quelconque des revendications 1 à 14 et une robinetterie à soupapes (24) avec une broche et un organe de soupape, dans laquelle l'entraînement rotatif (40) à actionnement fluidique est placé sur la robinetterie à soupapes (24), et l'organe de soupape est accouplé de manière mécanique par l'intermédiaire de la broche au niveau de l'arbre de sortie (6) de l'entraînement rotatif (40) à actionnement fluidique, de sorte que la position de l'organe de soupape est définie par la position de l'arbre de sortie (6).
